Europäisches Patentamt

European Patent Office

Office européen des brevets

(19)

(11) EP 0 745 762 B1

(12) EUROPEAN PATENT SPECIFICATION

(45) Date of publication and mention
of the grant of the patent:
24.11.1999 Bulletin 1999/47

(51) Int Cl.⁶: F02D 21/08

(21) Application number: 96106851.7

(22) Date of filing: 30.04.1996

(54) **Exhaust gas recirculation system for engine**

Abgasrückführungssystem für Brennkraftmaschine

Système de recirculation de gaz d'échappement pour moteur

(84) Designated Contracting States:
DE FR GB

(30) Priority: 02.05.1995 JP 10859395

(43) Date of publication of application:
04.12.1996 Bulletin 1996/49

(73) Proprietor: TOYOTA JIDOSHA KABUSHIKI
KAISHA
Aichi-ken (JP)

(72) Inventors:
• Fukuma, Takao
  Toyota-shi, Aichi (JP)
• Matsumura, Toshimi
  Kariya-city, Aichi-pref. 448 (JP)
• Takemoto, Eiji
  Kariya-city, Aichi-pref. 448 (JP)

(74) Representative:
Winter, Brandl, Fürniss, Hübner, Röss, Kaiser,
Polte, Kindermann Partnerschaft
Patent- und Rechtsanwaltskanzlei
Alois-Steinecker-Strasse 22
85354 Freising (DE)

(56) References cited:
EP-A- 0 115 862          EP-A- 0 234 511
US-A- 4 095 570          US-A- 4 448 177
US-A- 4 541 398          US-A- 4 757 683
US-A- 5 377 651

• PATENT ABSTRACTS OF JAPAN vol. 018, no.
164 (M-1579), 18 March 1994 & JP 05 332202 A
(TOYOTA MOTOR CORP), 14 December 1993,

**Description**

BACKGROUND OF THE INVENTION

1. Field of the Invention

The present invention relates to an exhaust gas recirculation system for an engine.

2. Description of the Related Art

Japanese Unexamined Patent Publication No. 5-332202 discloses an exhaust gas recirculation (EGR) system for an engine having an EGR gas passage connecting an intake passage and an exhaust passage to each other, in accordance with the preamble of claim 1. An EGR gas control valve is arranged in the EGR gas passage to control an amount of the EGR gas flowing through the EGR gas passage. The EGR system is provided with: target opening calculating means for calculating a target opening of the EGR gas control valve, which target opening being determined in accordance with the engine operating condition; output value calculating means for calculating an output value corresponding to the target opening; opening detecting means for detecting an actual opening of the EGR gas control valve; correcting means for correcting the output value calculated by the output value calculating means in accordance with output signals from the opening detecting means, using a feedback correction coefficient, to make the actual opening of the EGR gas control valve equal to the target opening; and opening changing means for changing the opening of the EGR gas control valve in accordance with the corrected output value.
Under such a feedback control, the output value output to the opening changing means is expressed by the following equation:

$$\text{(output value)} = \text{(target opening)} + \text{(feedback correction coefficient)}$$

where

$$\text{(feedback correction coefficient)} = \text{(proportional term)} + \text{(integral term)}$$

The proportional term is determined to become larger as a difference between the actual opening and the target opening becomes larger. The integral term is renewed with a renewal value one after another, and the renewal value is determined to become larger as a difference between the actual opening and the target opening becomes larger. The proportional term is determined to be relatively larger, and thereby fluctuates relatively quickly. On the other hand, the renewal value of the integral term is determined to be smaller than the proportional term with the identical difference, and thereby the integral term fluctuates gradually. Note that the proportional and the integral terms fluctuate around a reference value, such as zero.
When, for example, the target opening suddenly increases and the opening of the EGR gas control valve does not sufficiently follow, to thereby make the difference between the actual opening and the target opening larger, the proportional term suddenly increases and the integral term also increases. This results in making the difference smaller.
As the difference becomes smaller, the proportional term decreases. On the other hand, the integral terms increases, as long as the actual opening is smaller than the target opening. Therefore, the integral term becomes larger than zero, even when the actual opening becomes equal to the target opening, nonetheless the proportional term becomes zero.
Accordingly, the actual opening increases over the target opening. When the actual opening is larger than the target opening, the integral value decreases and the proportional term also decreases, and thereby the actual opening is made equal to the target opening, finally.
In other words, if the target opening suddenly increases, the actual opening is kept larger than the target opening for a while, after the actual opening is once made equal to the target opening. However, if the actual opening is larger than the target opening in the EGR system mentioned above, the amount of the EGR gas supplied to the engine is larger than a required amount of the EGR gas determined in accordance with the target opening. Particularly, if the EGR system is applied to a diesel engine, such an excess EGR gas increases an amount of particulate exhausted into the exhaust passage. The further excess EGR gas leads to the production of undesirable smoke.
On the other hand, the actual opening decreases below the target opening when the target opening suddenly decreases, and thereby the amount of the supplied EGR gas becomes smaller than the required amount. This also leads to increase the amount of particulate exhausted in the exhaust passage. Namely, if the feedback correction coefficient is obtained by the proportional and the integral terms, the actual opening may undesirably deviate from the target opening.

SUMMARY OF THE INVENTION

An object of the present invention is to provide an exhaust gas recirculation system able to prevent from the supply of the EGR gas to the engine excessively or insufficiently.

This object is solved by the subject matter in accordance with the features of claim 1. Preferred embodiments thereof are defined in the subclaims.

According to the present invention, there is provided an exhaust gas recirculation system for an engine having an intake passage and an exhaust passage, the system comprising: an EGR gas passage connecting the intake and the exhaust passages to each other; an EGR gas control valve arranged in the EGR gas passage for controlling an amount of the EGR gas flowing through the EGR gas passage; target opening calculating means for calculating a target opening of the EGR gas control valve in accordance with an engine operating condition; output value calculating means for calculating an output value corresponding to the target opening; opening detecting means for detecting an actual opening of the EGR gas control valve; correcting means for correcting the output value calculated by the output value calculating means in accordance with output signals from the opening detecting means, using a feedback correction coefficient, to make the actual opening of the EGR gas control valve equal to the target opening; correction changing means for changing the correction by the correcting means in accordance with the engine operating condition; and opening changing means for changing the opening of the EGR gas control valve in accordance with the corrected output value.

The present invention may be more fully understood from the description of the preferred embodiments of the invention as set forth below, together with the accompanying drawings.

BRIEF DESCRIPTION OF THE DRAWINGS

In the drawings:

Fig. 1 is a general view of an engine;
Fig. 2 is a diagram illustrating a target opening of an EGR gas control valve;
Fig. 3 is a diagram illustrating a proportional term and a renewal value of an integral term;
Fig. 4 is a diagram illustrating a rate of change in a valve opening;
Figs. 5 and 6 are time charts illustrating undesirable examples, respectively;
Figs. 7 and 8 are time charts illustrating an embodiment according to the present invention, respectively;
Fig. 9 shows a flowchart for executing an initialization;
Fig. 10 shows a flowchart for executing a first determination;
Fig. 11 shows a flowchart for executing a second determination; and
Fig. 12 shows a flowchart for executing a feedback control.

DESCRIPTION OF THE PREFERRED EMBODIMENTS

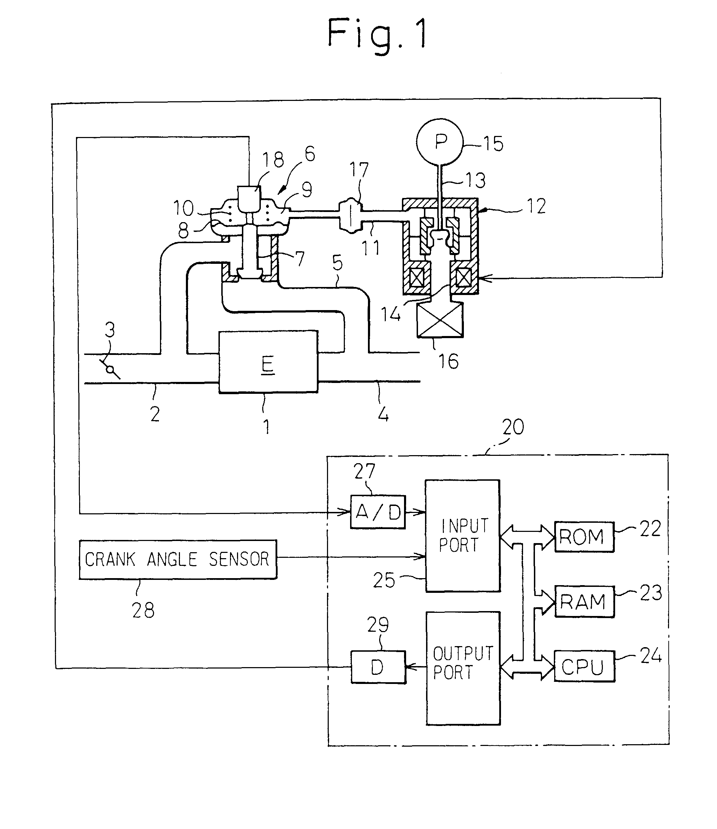

Fig. 1 illustrates the present invention applied to a diesel engine. Alternatively, the present invention may be applied to a spark-ignition engine.

Referring to Fig. 1, a reference numeral 1 designates an engine body, 2 designates an intake passage, 3 designates a throttle valve arranged in the intake passage 2, 4 designates an exhaust passage. Further, 5 designates an EGR gas passage connecting the intake passage 2 downstream of the throttle valve 3 and the exhaust passage 4, and 6 designates an EGR gas control valve arranged in the EGR gas passage 5. The intake passage 2 includes a surge tank, and the surge tank is connected to each cylinder of the engine via corresponding branches. The exhaust passage 3 includes an exhaust manifold common to the cylinders, and the exhaust manifold is connected to a catalytic convertor (not shown). The EGR gas passage 5 extends between, for example, the surge tank and the exhaust manifold.

As shown in Fig. 1, the EGR gas control valve 6 has an axially displacable valve body 7, a diaphragm 8 to which the valve body 7 is fixed, a vacuum chamber 9 defined by the diaphragm 8, and a return spring 10 arranged in the vacuum chamber 9 to bias the diaphgram 8 to make the displacement thereof equal to zero. The vacuum chamber 9 is connected to a vacuum control valve 12 via a vacuum introducing passage 11. The vacuum control valve 12 selectively connects the vacuum introducing passage 11 to one of a vacuum passage 13 and an atmosphere passage 14. The vacuum passage 13 is connected to a vacuum pump 15 driven by, for example, the engine, and the atmosphere passage 14 communicates with the atmosphere via an air-cleaner 16. The vacuum introducing passage 11 includes a vacuum damper 17 therein. Note that the vacuum control valve 12 is controlled by signals output from an electronic control unit 20.

When the vacuum introducing passage 11 is connected to the atmosphere passage 14 via the vacuum control valve 12, atmospheric pressure is led into the vacuum chamber 9. This makes the displacement of the diaphragm 8 substantially equal to zero, and thus the EGR gas control valve 6 is closed. When the EGR gas control valve 6 is closed, there is no EGR gas flow through the EGR gas passage 5. Contrarily, when the vacuum introducing passage 11 is connected to the vacuum passage 13 via the vacuum control valve 12, the negative pressure produced by the vacuum pump 15 is led into the vacuum chamber 9. When the opening force due to the negative pressure in the vacuum chamber 9 prevails over the closing force due to the return spring 10, the diaphragm 8 displaces to displace the valve body 7 axially, that is, upwardly in Fig. 1. Thus, the EGR gas control valve 6 opens. As the vacuum in the vacuum chamber 9 becomes larger, the displacement of the diaphragm 8 becomes larger, and the opening of the EGR gas control valve also becomes larger. When the EGR gas control valve is opened, the EGR gas is supplied to the engine through the EGR gas passage 5. As the opening of the EGR gas control valve becomes larger, the amount of the supplied EGR gas becomes larger, at a constant engine operating condition. Note that the vacuum control valve 12 is controlled in accordance with a duty ratio, which is a ratio of a period in which the vacuum chamber 9 is to be connected to the vacuum passage 13, to a duty cycle time. The atmospheric pressure is fully introduced in the vacuum chamber 9 when the duty ratio is 0%, and the negative pressure produced by the vacuum pump 15 is fully introduced in the vacuum chamber 9 when the duty ratio is 100%.

An opening sensor 18 is provided to the EGR gas control valve 6, to detect an actual opening of the EGR gas control valve 6. The sensor 18 actually detects an axial displacement of the valve body 7. As mentioned above, the opening of the EGR gas control valve 6 becomes larger as the axial displacement of the valve body 7 becomes larger. Thus, the opening of the EGR gas control valve 6 is detected by detecting the axial displacement of the valve body 7.

The electronic control unit (ECU) 20 is constructed as a digital computer and comprises a read-only memory (ROM) 22, a random-access memory (RAM) 23, the CPU (micro processor) 24, an input port 25, and an output port 26. ROM 22, RAM 23, CPU 24, the input port 25, and the output port 26 are interconnected with each other via a bidirectional bus 21. The opening sensor 18 generates an output voltage in proportion to the axial displacement of the valve body 7 of the EGR gas control valve 6, and this output voltage is input to the input port 22 via an AD converter 27. The input port 25 is also connected to a crank angle sensor 28, which generates a pulse whenever a crankshaft is turned by, for example, 30 degrees.

According to this pulses, the CPU 24 calculates the engine speed. The output port 26 is connected to the vacuum control valve 12 via a drive circuit 29.

The vacuum control valve 12 is controlled in accordance with an output value OUTPUT output from the ECU 20. In this embodiment, the output value OUTPUT is calculated using the following equation:

$$OUTPUT = KTGT + KFB$$

where

    KTGT: basic output value
    KFB: feedback correction coefficient

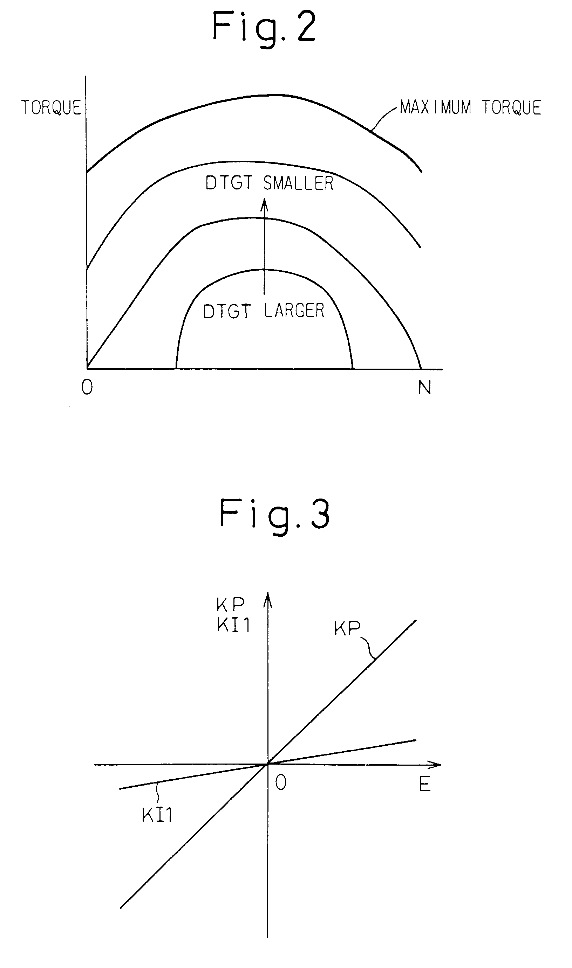

KTGT represents an output value corresponding to a target opening DTGT of the EGR gas control valve 6. Namely, under a stable condition with KFB = 0, when the vacuum control valve 12 receives the output value KTGT, the opening of the EGR gas control valve 6 is made equal to the target opening DTGT. The target opening DTGT is an opening required for supplying a suitable amount of the EGR gas to the engine which is defined in accordance with the engine operating condition, and is obtained in advance by experiments The target opening DTGT is stored in the ROM 22, in advance, as a function of the engine speed N and the torque, as shown in Fig. 2. The curves in Fig. 2 indicate identical values of the target opening DTGT. As can be seen from Fig. 2, the target opening DTGT becomes smaller when the torque becomes larger, with the constant engine speed N.

As mentioned above, the vacuum control valve 12 is controlled in accordance with the duty ratio, and the coefficients OUTPUT, KTGT, and KFB represent the duty ratios, respectively. Further, in this embodiment, the target opening DTGT is obtained in accordance with the engine operating condition, and the basic output value KTGT is obtained in accordance with the target opening DTGT. Alternatively, the target opening DTGT may be stored in advance in the form of a duty ratio. Note that the target opening DTGT is made zero when the supply of the EGR gas is to be stopped. When the output value OUTPUT is made zero or a negative value, the atmospheric pressure is led into the vacuum chamber 9, and thereby the EGR gas control valve 6 is closed.

KFB is a feedback correction coefficient to make an actual opening DACT of the EGR gas control valve 6 equal to the target opening DTGT. The feedback correction coefficient KFB is formed by a plurality of correction terms. In this embodiment, the feedback correction coefficient KFB is represented as a sum of a proportional term KP and a integral term KI, as follows:

$$KFG = KP + KI$$

The proportional term KP is calculated as a function of a difference E between the target opening DTGT and the actual opening DACT detected by the opening sensor 18, that is, DTGT - DACT, as shown in Fig. 3, and becomes larger as the difference E becomes larger.

The integral term KI is renewed with renewal values KI1 one after another, as shown in the following equation:

$$KI = KI + KI1$$

The renewal value KI1 becomes larger as the difference E becomes larger, as shown in Fig. 3. The renewal value KI1 is much smaller than the proportional term KP, and thus the integral term KI fluctuates gradually with respect to the proportional term KP. Note that the proportional term KP and the renewal value KI1 are made both zero when the difference E is zero, and are stored in the ROM 22, in advance in the form of a map as shown in Fig. 3.

When the target opening DTGT increases and thereby the difference E increases, the proportional term KP increases. This results in making the difference E smaller. In this way, the proportional term KP assures an initial response of the EGR gas control valve 6. When the difference E becomes smaller, the proportional term KP also becomes smaller, but the integral term KI is relatively large at this time. The integral term KI makes the actual opening DACT equal to the target opening DTGT. Namely, the integral term KI helps to make the actual opening DACT equal to the target opening DTGT correctly and quickly.

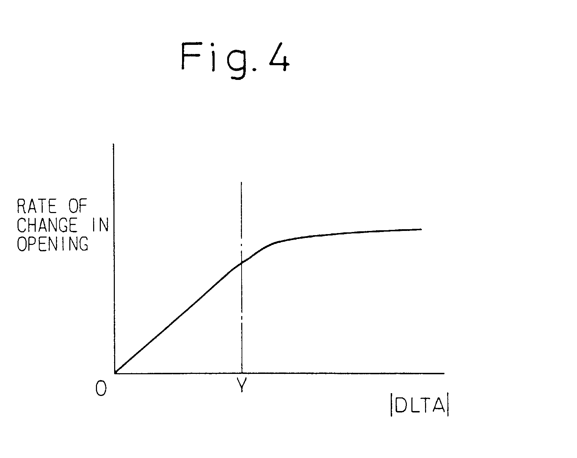

The response of the EGR gas control valve 6 depends on a rate of change DLTA in the target opening DTGT. Namely, a rate of change in the actual opening DACT, which represents the response of the EGR gas control valve 6, is proportional to the change rate DLTA, when the absolute value of DLTA IDLTAI is smaller than a predetermined value Y, which is defined in accordance with the characteristic of the EGR gas control valve 6, as shown in Fig. 4. That is, a good response of the EGR gas control valve 6 can be obtained when IDLTAI < Y.

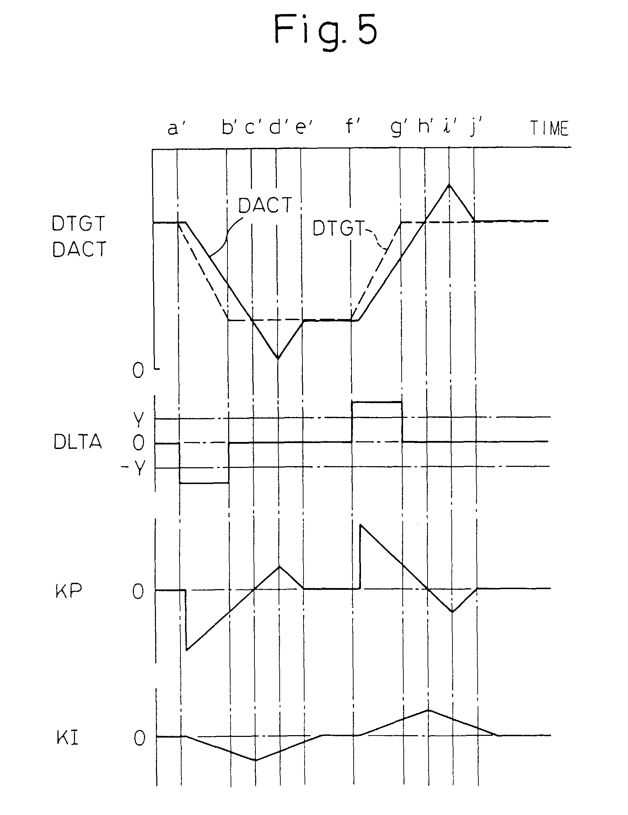

On the contrarily, when IDLTAI > Y, the change rate of the opening of the EGR gas control valve 6 does not follow IDLTAI, and thus the response of the EGR gas control valve 6 deteriorates. Under this condition, if the correction of the basic output value KTGT by both of the proportional and the integral terms KP and KI is continued, it is not possible to make the actual opening DACT equal to the target opening DTGT correctly. This problem also may occur when the target opening DTGT and the actual opening DACT are both zero, and then the target opening DTGT increases. Next, the explanation as to the case in which IDLTAI > Y will be made with reference to Fig. 5.

Fig. 5 shows a time chart illustrating an undesirable example, in which IDLTAI > Y and the target opening DTGT is larger than zero. When the target opening DTGT suddenly decreases from the time a' to time b' in Fig. 5 and thereby IDLTAI becomes smaller than -Y, the proportional term KP suddenly decreases and the integral term KI gradually decreases. As a result, the feedback correction coefficient KFG decreases and thereby the actual opening DACT suddenly decreases. As the actual opening DACT becomes closer to the target opening DTGT, the proportional term KP becomes larger and closer to zero. On the other hand, the integral term KI continuously decreases as long as DACT > DTGT. Next, when DACT = DTGT at the time c', the proportional term KP becomes zero. However, the integral term KI is much smaller than zero at this time. Thus, the actual opening DACT decreases below the target opening DTGT after the time c'.

When the actual opening DACT is smaller than the target opening DTGT, the proportional and the integral terms KP and KI increase, and thereby the actual opening DACT starts to increase at the time d'. However, the integral term KI is renewed with the relatively smaller renewal value KI1, and thus increases gradually. Finally, the actual opening DACT becomes equal to the target opening DTGT at the time e'. Therefore, the actual opening DACT is smaller than the target opening DTGT from the time c' to time e'.

If DACT < DTGT, the amount of the EGR gas supplied to the engine is less than a suitable amount for the engine, as mentioned above, where the suitable amount is defined in accordance with the target opening DTGT. This undesirably increases the amount of particulates exhausted from the engine to the exhaust passage 4. Note that, when the target opening DTGT suddenly decreases to zero, the EGR gas control valve 6 is kept closed, that is, the actual opening DACT is kept the target opening DTGT, even if DLTA < -Y.

Further, referring to Fig. 5, when the target opening DTGT suddenly increases from the time f' to time g' and thereby IDLTAI becomes larger than Y, the proportional term KP suddenly increases and the integral term KI gradually increases. As a result, the feedback correction coefficient KFG increases and thereby the actual opening DACT suddenly increases. As the actual opening DACT becomes closer to the target opening DTGT, the proportional term KP becomes smaller and closer to zero. On the other hand, the integral term KI continuously increases as long as DACT < DTGT. Next, when DACT = DTGT at the time h', the proportional term KP becomes zero. However, the integral term KI is much larger than zero at this time. Thus, the actual opening DACT increases over the target opening DTGT, after the time h'.

When the actual opening DACT is larger than the target opening DTGT, the proportional and the integral terms KP and KI decrease, and thereby the actual opening DACT starts to decrease at the time i'. However, the integral term KI decreases gradually. Finally, the actual opening DACT becomes equal to the target opening DTGT at the time j'. Therefore, the actual opening DACT is larger than the target opening DTGT from the time h' to time j'.

If DACT > DTGT, the amount of the EGR gas supplied to the engine is larger than the suitable amount. This also undesirably increases the amount of the particulate exhausted.

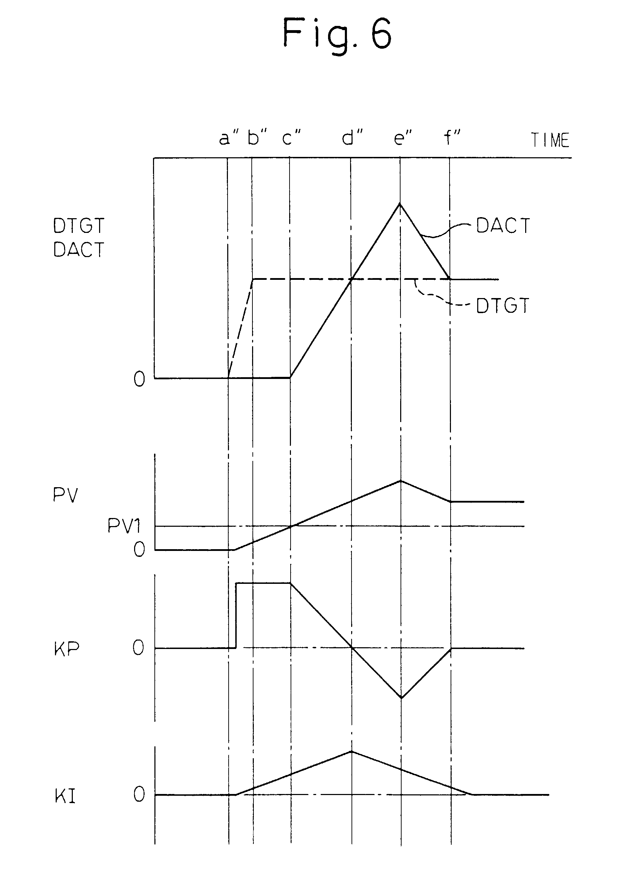

Fig. 6 show a time chart illustrating an undesirable example, in which the target opening DTGT increases from the condition in which the target and the actual openings DTGT and DACT are both zero. Before the time a" in Fig. 6, DTGT = 0 and DACT = 0. In this condition, the atmospheric pressure is led into the vacuum chamber 9 of the EGR gas control valve 6. Namely, the negative pressure PV in the vacuum chamber 9 is made zero. Next, when the target opening DTGT suddenly increases from zero from the time a" to time b", the proportional term KP suddenly increases and the integral term KI gradually increases. Thus, the feedback correction coefficient KFB increases and thereby the negative pressure PV in the vacuum chamber 9 is made larger. As mentioned above, when the negative pressure in the vacuum chamber 9 is zero, namely, the atmospheric pressure is led into the vacuum chamber 9, even if the negative pressure is led into the vacuum chamber 9, the EGR gas control valve 6 is kept closed until the opening force by the negative pressure in the vacuum chamber 9 becomes larger than the closing force by the return spring 10. In other words, the EGR gas control valve 6 opens when the negative pressure PV in the vacuum chamber 9 is larger than an opening pressure PV1. At the time c", the negative pressure PV becomes larger than the opening pressure PV1, and thus, the EGR gas control valve 6 starts to open. Namely, the actual opening DACT starts to increase from zero.

Next, at the time d", the actual opening DACT becomes equal to the target opening DTGT, and thereby the proportional term KP is made zero. At this time, the integral term KI is much larger than zero. As a result, the actual opening DACT increases over the target opening DTGT. When the actual opening DACT is larger than the target opening DTGT, the proportional and the integral terms KP and KI decrease, and thereby the actual opening DACT starts to decrease at the time e". However, the integral term KI decreases gradually. Finally, the actual opening DACT becomes equal to the target opening DTGT at the time f'. Therefore, the actual opening DACT is larger than the target opening DTGT from the time d" to time f", as in the undesirable example of Fig. 5.

The integral term KI at the time d" in Fig. 6 is larger than that at the time i' in Fig. 5. This makes the supplied amount of the EGR gas more excessive with respect to the example of Fig. 5. Particularly, in the EGR system wherein the EGR gas control valve 6 has the vacuum chamber 9 and is controlled in accordance with the negative pressure in the vacuum chamber 9, the amount of the supplied EGR gas may be much larger than the suitable amount. If the EGR gas is supplied more excessively in this way, the combustion in the engine becomes unstable and thus, the undesired smoke may be exhausted into the exhaust passage 4. Note that such an excess supply of the EGR gas when the actual opening DACT increases from zero may occur regardless the change rate DLTA of the target opening DTGT.

The fact that the EGR gas is supplied excessively or insufficiently as mentioned above with reference to Figs. 5 and 6, is due to the excess correction by the integral term KI, that is, is due to the integral term KI being much larger or smaller than zero when the actual opening DACT is once made equal to the target opening DTGT. Therefore, in the present invention, the correction by the integral term KI is reduced when the change rate of the target opening DTGT is relatively larger, that is, IDLTAI > Y, to thereby prevent supplying the EGR gas excessively or insufficiently. Especially, in this embodiment, the integral term KI is made zero when IDLTAI > Y. Namely, the correction by the integral term KI is stopped when IDLTAI > Y.

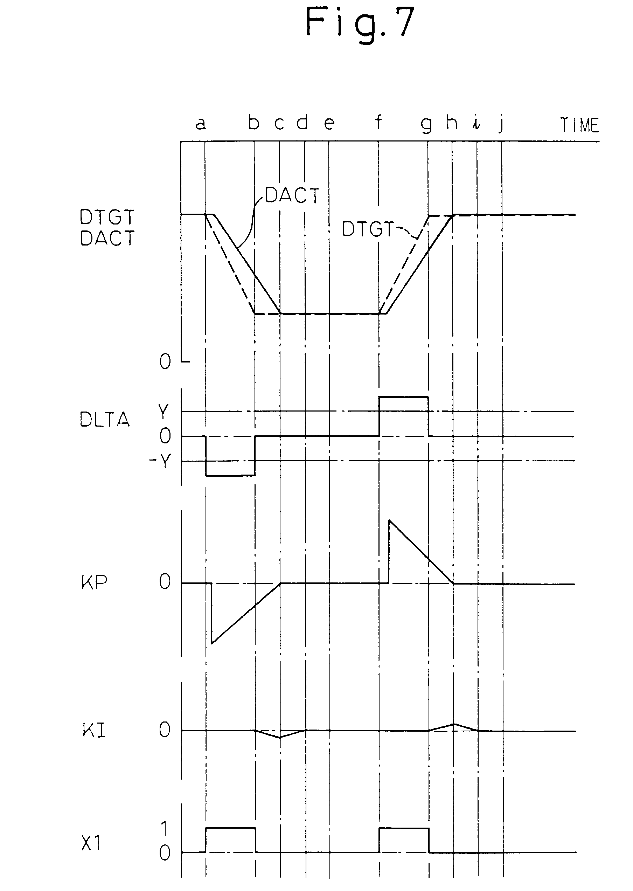

Fig. 7 shows a time chart illustrating this embodiment when the target opening DTGT changes as shown in Fig. 5. Referring to Fig. 7, from the time a to time b in which DLTA < -Y, a factor X1 which is made either zero or 1 is made 1. This factor X1 is made zero when the correction by the integral term KI is to be performed, and is made 1 when the correction by the integral term KI is to be stopped. Therefore, the integral term KI is kept zero when DLTA < -Y. At the time b, DLTA becomes zero and the factor X1 is made zero. Thus, the correction by the integral term KI starts at this time, and the integral term KI is renewed with the renewal value KI1.

Then, at the time c, the actual opening DACT becomes equal to the target opening DTGT, while the integral term KI is closer to zero. As a result, the integral term KI little influences on the actual opening DACT, and this prevents the actual opening DACT from decreasing below the target opening DTGT after the actual opening DACT is once made equal to the target opening DTGT. Accordingly, the EGR gas supplied to the engine is prevented from being insufficient when DLTA < -Y, and thereby a large amount of particulates is prevented from being exhausted into the exhaust passage 4.

The factor X1 is made 1 from the time f to time g in which DLTA > Y. Namely, the integral term KI is kept zero from the time f to time g. At the time g, DLTA becomes zero and the factor X1 is made zero. Thus, the correction by the integral term KI resumes at this time.

Then, at the time h, the actual opening DACT is made equal to the target opening DTGT, while the integral term KI is closer to zero. As a result, the integral term KI hardly influences the actual opening DACT, and this prevents the actual opening DACT from increasing over the target opening DTGT after the actual opening DACT is once made equal to the target opening DTGT. This prevents the EGR gas supplied to the engine from being excessive when DLTA > Y, to thereby prevent a larger amount of particulates from being exhausted into the exhaust passage 4.

Further, in the present invention, the correction by the integral term KI is reduced when the target opening DTGT increases from the condition in which the actual and the target openings DACT and DTGT are both zero, to thereby prevent the actual opening DACT from increasing over the target opening DTGT. To reduce the correction by the integral term KI, in this embodiment, the integral term KI is kept zero, namely, the correction by the integral term KI is stopped.

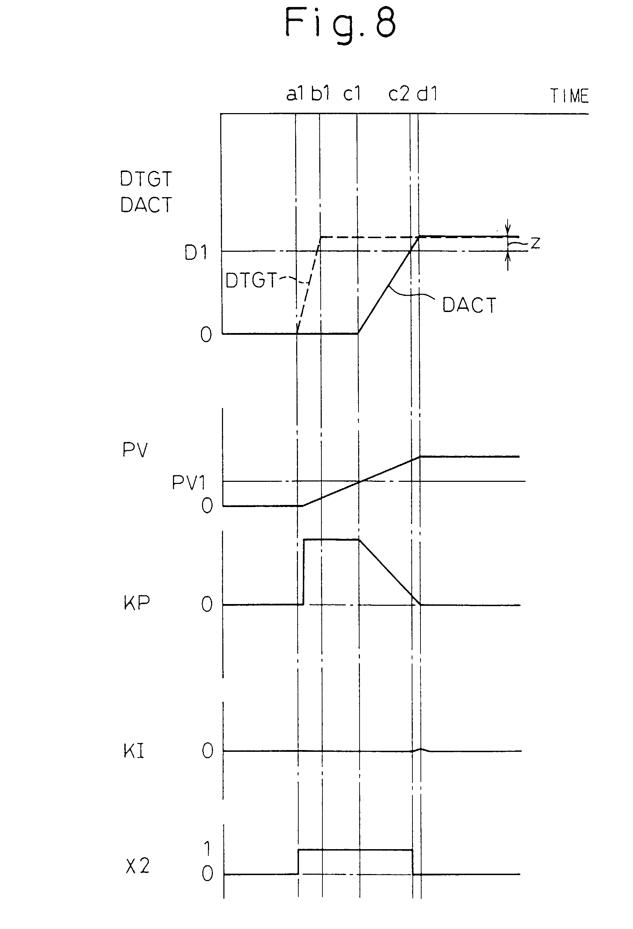

Fig. 8 shows a time chart illustrating this embodiment when the target opening DTGT changes as in Fig. 6. Referring to Fig. 8, before the time al, DTGT = 0 and DACT = 0. In this condition, a factor X2 is made zero. This factor X2 is made zero when the correction by the integral term KI is to be performed, and is made 1 when the correction by the integral term KI is to be stopped. Next, when the target opening DTGT suddenly increases from zero from the time al to time bl, the factor X2 is made 1, and thereby the correction by the integral term KI is stopped. Then, at the time cl, the actual opening DACT starts to increase, and then, at the time c2, the actual opening DACT is made equal to D1. D1 is an opening when the difference between the actual opening DACT and the target opening DTGT is a small value z. When the actual opening DACT becomes larger than D1, that is, DTGT - DACT < z, the factor X2 is made zero to thereby resume the correction by the integral term KI.

After the difference between the target opening DTGT and the actual opening DACT becomes smaller, if the correction is performed only by the proportional term KP, namely, if the correction by the integral term KI is continuously stopped, it may take a relatively long time to make the actual opening DACT equal to the target opening DTGT correctly. Contrarily, in this embodiment, by resuming the correction by the integral term KI when the actual opening DACT becomes larger than DI, that is, DTGT- DACT < z, it is possible to make the actual opening DACT equal to the target opening DTGT quickly. As a result, the actual opening DACT is quickly made equal to the target opening DTGT at the time d1. After the time d1 in which DACT = DTGT, the integral term KI is kept substantially zero. This prevents the actual opening DACT from increasing over the target opening DTGT. Accordingly, the EGR gas is prevented from being supplied very excessively when the target opening DTGT increases from the condition in which DACT = 0 and DTGT = 0. Therefore, undesirable smoke or a large amount of particulates is prevented from being exhausted into the exhaust passage 4.

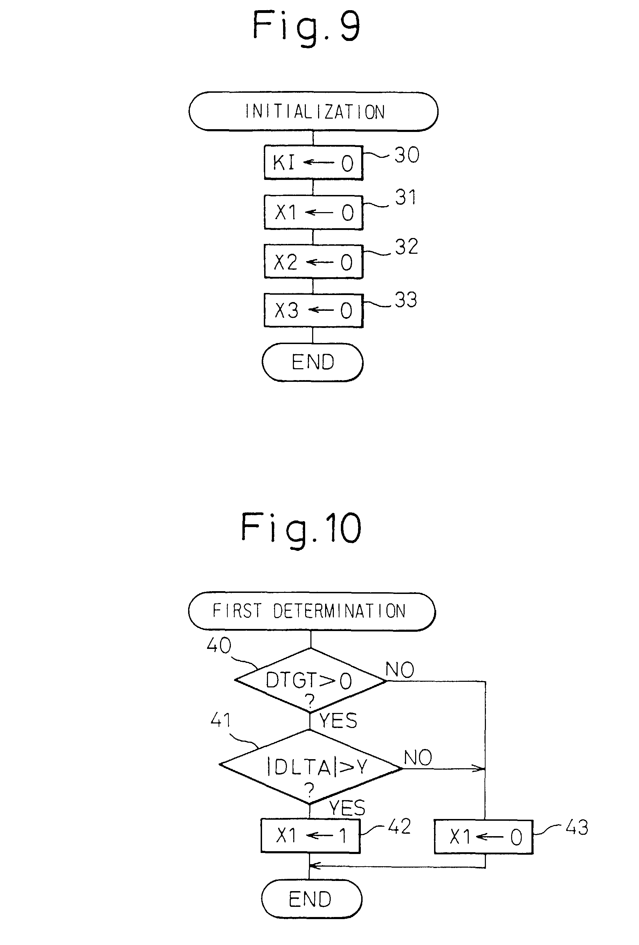

Next, the routines for executing the above-mentioned embodiment will be explained, with reference to Figs. 9 to 12.

Fig. 9 illustrates a routine for executing an initialization. This routine is executed only once when the engine starts, that is, when the ignition switch (not shown) is turned on, for example.

Referring to Fig. 9, first, in step 30, the integral term KI is made zero. In following steps 31 and 32, the factors X1 and X2, each of which is made 1 when the correction by the integral term KI is to be stopped and is made zero when the correction by the integral term KI is to be performed, are made zero. In following step 33, a factor X3 is made zero. The factor X3 is made either zero or 1, as explained below. Then, the processing cycle is ended.

Fig. 10 illustrates a routine for executing a first determination for determining whether the correction by the integral term KI is to be stopped. This routine is executed by interruption every predetermined time.

Referring to Fig. 10, first, in step 40, it is determined whether the target opening DTGT is larger than zero. If DTGT > 0, the routine goes to step 41, and if DTGT = 0, the routine jumps to step 43. In step 41, it is determined whether the absolute value IDLTAI of the change rate of the target opening DTGT is larger than the value Y shown in Fig. 4. The value Y is obtained by experiment in advance, and is stored in the ROM 22.

When IDLTAI > Y, the response of the EGR gas control valve 6 deteriorates as mentioned above with reference to Fig. 5. In this condition, if the basic output value KTGT is corrected by the integral term KI, the actual opening DACT may deviate from the target opening DTGT to thereby lead to an excess or insufficient supply of the EGR gas. Therefore, if IDLTAI > Y in step 41, the routine goes to step 42 where the factor X1 is made 1 to thereby stop the correction by the integral term KI. That is, the correction by the integral term KI is stopped when IDLTAI > Y.

Contrarily, if DTGT = 0 in step 40 or if IDLTAI < Y in step 41, a good response of the EGR gas control valve 6 is assured, and it is possible to make the supplied amount of the EGR gas suitable for the engine. Thus, the routine goes to step 43 where the factor X1 is made 0, that is, the correction by the integral term KI is performed. Then, the processing cycle is ended.

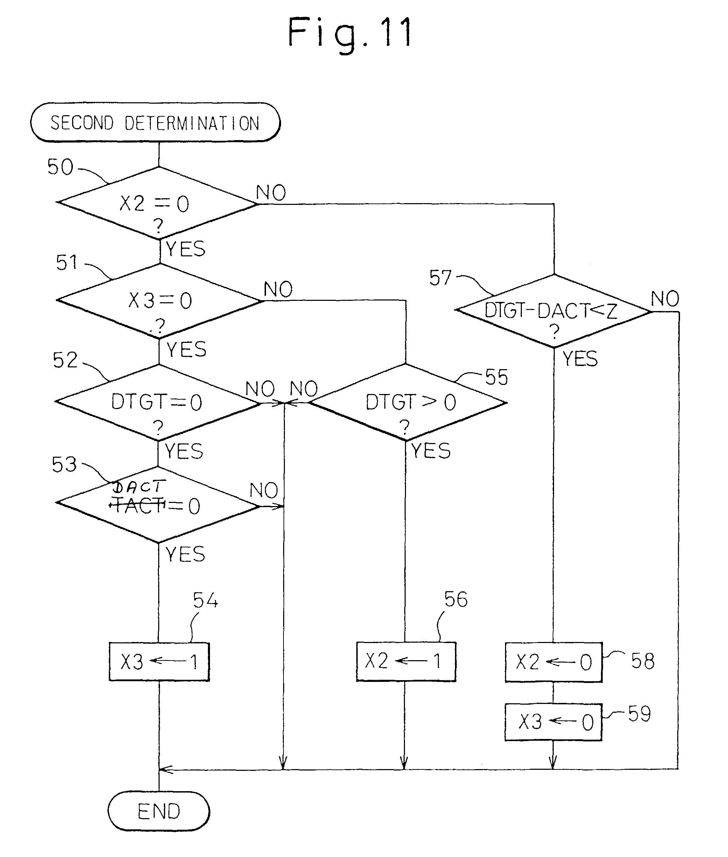

Fig. 11 illustrates a routine for executing a second determination for determining whether the correction by the integral term KI is to be stopped. This routine is executed by interruption every predetermined time.

Referring to Fig. 11, first, in step 50, it is determined whether the factor X2 is zero. If X2 = 0, the routine goes to step 51, where it is determined whether the factor X3 is zero. If X3 = 0, the routine goes to step 52, where it is determined whether the target opening DTGT is zero. If DTGT = 0, the routine goes to step 53, where it is determined whether the actual opening DACT is zero. If DACT = 0, the routine goes to step 54, where the factor X3 is made 1. Namely, X3 = 1 when DTGT = 0 and DACT = 0. Then, the processing cycle is ended. Contrarily, if DTGT > 0 in step 52 or DACT > 0 in step 53, the processing cycle is ended. Namely, the factor X3 is kept zero and the correction by the integral term KI is continued.

When the factor X3 is made 1 in step 54, the routine goes to step 55 where it is determined whether the target opening DTGT is larger than zero. If DTGT > 0, the routine goes to step 56 where the factor X2 is made 1. Namely, the correction by the integral term KI is stopped when the target opening DTGT increases from the condition in which DTGT = 0 and DACT = 0. Contrarily, if DTGT = 0 in step 55, the processing cycle is ended. Namely, the factor X2 is kept zero.

When the factor X2 is made 1 in step 56, the routine goes to step 57, where it is determined whether the difference DTGT - DACT is smaller than z. If DTGT - DACT > Z, the processing cycle is ended. Namely, the correction by the integral term KI is continuously stopped. If DTGT - DACT < z, the routine goes to step 58, where the factor X2 is made 0. Namely, when DTGT - DACT < z, the EGR gas control valve 6 is prevented from deviating widely, even if the correction by the integral term KI is resumed. Therefore, the correction by the integral term KI is resumed at this time. In following step 59, the factor X3 is also made zero. Then, the processing cycle is ended.

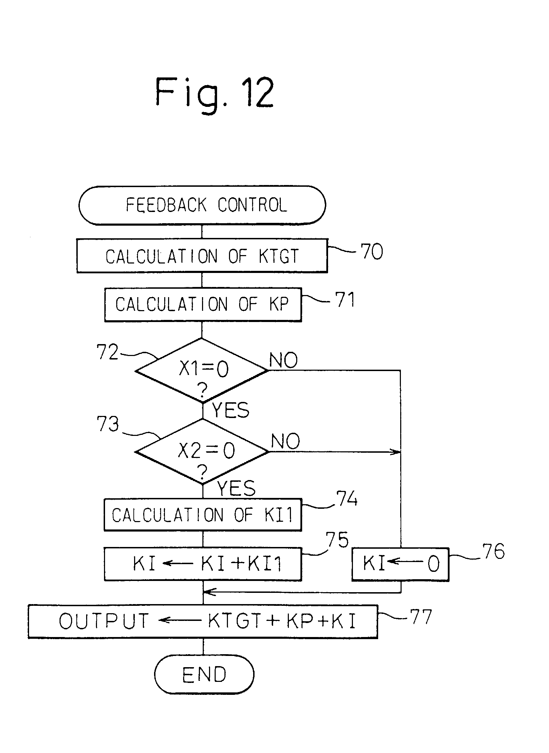

Fig. 12 is a routine for feedback controlling the opening of the EGR gas control valve 6. This routine is executed by interruption every predetermined time.

Referring to Fig. 12, first, in step 70, the basic output value KTGT is calculated, in accordance with the target opening DTGT calculated using the map shown in Fig. 2. In the following step 71, the proportional term KP is calculated using the map shown in Fig. 3. In the following step 72, it is determined whether the factor X1 is zero. If X1 = 0, the routine goes to step 73, and if X1 = 1, the routine jumps to step 76. In step 73, it is determined whether the factor X2 is zero. If X2 = 0, the routine goes to step 74, and if X1 = 1, the routine jumps to step 76. Namely, when both X1 and X2 are zero, the routine goes to step 74.

In step 74, the renewal value KI1 of the integral term KI is calculated using the map shown in Fig. 3. In following step 75, the integral term KI is calculated using the following equation:

$$KI = KI + KI1$$

Thus, the correction by the integral term KI is performed when the routine goes to steps 74 and 75. Then, the routine goes to step 77. Contrarily, in step 76, the integral term KI is made zero. Namely, the correction by the integral term KI is stopped when the routine goes to step 76. Then, the routine goes to step 77.

In step 77, the output value OUTPUT is calculated using the following equation:

$$OUTPUT = KTGT + KP + KI$$

The vacuum control valve 12 is driven in accordance with the output value OUTPUT in the form of the duty ratio. This results in introducing the negative or the atmospheric pressure into the vacuum chamber 9 of the EGR gas control valve 6, to thereby drive the EGR gas control valve 6.

In the embodiment mentioned above, the integral term KI is made zero to reduce the correction by the integral term KI. Alternatively, the correction by the integral term KI may be reduced by reducing the absolute value of the integral term KI. This is achieved by, for example, making the product of the integral term KI and a constant smaller than 1.

Further, in the embodiment mentioned above, the EGR gas control valve 6 includes the vacuum chamber 9 to control the opening thereof. Alternatively, an actuator of electromagnetic type may be connected to the valve body 7 to control the opening.

Furthermore, in the above mentioned embodiment, it is determined whether the correction by the integral term KI is to be reduced when DLTA < -Y or Y < DLTA. Namely, the upper and the lower thresholds are identical to each other. Alternatively, the upper and the lower thresholds are set different from each other.

According to the present invention, it is possible to provide an exhaust gas recirculation system enable to prevent supplying EGR gas to the engine excessively or insufficiently.

**Claims**

1. An exhaust gas recirculation system for an engine (1) having an intake passage (2) and an exhaust passage (4), the system comprising:

   an EGR gas passage (5) connecting the intake and the exhaust passages (2, 4) to each other;
   an EGR gas control valve (6) arranged in the EGR gas passage (5) for controlling an amount of the EGR gas flowing through the EGR gas passage (5);
   target opening calculating means (20) for calculating a target opening (DTGT) of the EGR gas control valve (6) in accordance with an engine operating condition;
   output value calculating means (20), for calculating an output value (KTGT) corresponding to the target opening (DTGT);
   opening detecting means (18) for detecting an actual opening (DACT) of the EGR gas control valve (6); and correcting means (20) for correcting the output value (KTGT) calculated by the output value calculating means (20) in accordance with output signals from the opening detecting means (18), using a feedback correction coefficient, to make the actual opening (DACT) of the EGR gas control valve (6) equal to the target opening (DTGT), wherein the feedback correction coefficient includes a proportional term (KP) and an integral term (KI), the proportional term (KP) becoming larger as a difference between the actual opening (DACT) and the target opening (DTGT) becomes larger, and the integral term (KI) being renewed with a renewal value (KI1) one after another, the renewal value (KI1) becoming larger as the difference becomes larger;

   characterized in
   correction changing means (20) for changing the correction by the correcting means (20) in accordance with a rate of change (DLTA) in the target opening (DTGT) of the EGR gas control valve (6); and opening changing means (20) for changing the opening of the EGR gas control valve (6) in accordance with the corrected output value (OUTPUT).

2. A system according to claim 1, wherein the correction changing means (20) reduces the correction of the correcting means (20) in accordance with the rate of change (DLTA) in the target opening (DTGT) of the EGR gas control valve (6).

3. A system according to claim 2, wherein the correction changing means (20) reduces the correction of the correcting means (20) when the rate of change (DLTA) of the target opening (DTGT) is larger than a predetermined upper threshold or is smaller than a predetermined lower threshold.

4. A system according to claim 3, wherein the correction changing means (20) resumes the correction of the correcting means (20) when the rate of change (DLTA) of the target opening (DTGT) becomes between the upper and the lower thresholds.

5. A system according to claim 2, wherein the EGR gas control valve (6) includes a vacuum chamber (9), to which a negative pressure can be introduced, the opening of the EGR gas control valve (5) becoming larger when the negative pressure in the vacuum chamber (9) becomes larger, and wherein the correction changing means (20) reduces the correction of the correcting means when the actual opening increases from zero.

6. A system according to claim 5, wherein the correction changing means (20) resumes the correction of the correcting means (20) when a difference between the target opening (DTGT) and the actual opening (DACT) is smaller than a predetermined value.

7. A system according to claim 5, wherein the EGR gas control valve (6) includes a diaphragm (8) to define the vacuum chamber (9), to which a valve body (7) thereof is fixed, and a return spring (10) to bias the diaphragm (8) toward the closing direction, and wherein the EGR gas control valve (6) opens when an opening force due to the negative pressure in the vacuum chamber is larger than a closing force due to the return spring (10).

8. A system according to claim 1, wherein the absolute value of the integral term (KI1) is made smaller when the correction is to be reduced.

9. A system according to claim 8, wherein the integral term (KI1) is made zero when the correction is to be reduced.

10. A system according to claim 1, wherein the output value (OUTPUT) is output in the form of a duty ratio.

11. A system according to claim 1, wherein the target opening (DTGT) becomes smaller when the output torque of the engine (1) becomes larger at a constant engine speed.

12. A system according to claim 1, wherein the EGR gas control valve (6) comprises a vacuum chamber (9), to which a negative pressure can be introduced, the opening of the EGR gas control (6) valve becoming larger as the negative pressure in the vacuum chamber (9) becomes larger, and a vacuum control valve (12) connected to the vacuum chamber (9), and wherein the vacuum control valve (12) selectively connects the vacuum chamber (9) to a vacuum source (15) or the atmosphere to selectively introduce the negative pressure or the atmospheric pressure in the vacuum chamber (9).

13. A system according to claim 1, wherein the engine (1) is a diesel engine.

**Patentansprüche**

1. Abgasrückführungssystem für eine Brennkraftmaschine (1) mit einem Einlaßkanal (2) und einem Auslaßkanal (4), umfassend:

   einen Abgasrückführungskanal (5), der den Einlaß- und Auslaßkanal (2, 4) miteinander verbindet,
   ein im Abgasrückführungskanal (5) angeordnetes Abgasrückführungssteuerventil (6) zum Steuern der Menge des Abgasrückführungsstroms durch den Abgasrückführungskanal (5);
   eine Soll-Öffnungsberechnungseinrichtung (20) zum Berechnen einer Soll-Öffnung (DTGT) des Abgasrückführungssteuerventils (6) in Abhängigkeit vom Betriebszustand der Brennkraftmaschine;
   eine Ausgabewertberechnungseinrichtung (20) zum Berechnen eines der Soll-Öffnung (DTGT) entsprechenden Ausgabewerts (KTGT);
   eine Öffnungserfassungseinrichtung (18) zum Erfassen einer Ist-Öffnung (DACT) des Abgasrückführungssteuerventils (6); und
   eine Korrektureinrichtung (20) zum Korrigieren des durch die Ausgabewertberechnungseinrichtung (20) berechneten Ausgabewerts (KTGT) in Abhängigkeit von den Ausgabesignalen der Öffnungserfassungseinrichtung (18) unter Verwendung eines Regelungskorrekturkoeffizienten, um die Ist-Öffnung (DACT) des Abgasrückführungssteuerventils (6) der Soll-Öffnung (DTGT) anzugleichen, wobei der Regelungskorrekturkoeffizient einen proportionalen Term (KP) and einen integralen Term (KI) beinhaltet, wobei der proportionale Term (KP) mit zunehmender Differenz zwischen Ist-Öffnung (DACT) und Soll-Öffnung (DTGT) größer und der integrale Term (KI) mittels eines Erneuerungswerts (KI1), der mit zunehmender Differenz größer wird, nacheinander erneuert wird;

   gekennzeichnet durch

   eine Korrekturänderungseinrichtung (20) zum Ändern der Korrektur durch die Korrektureinrichtung (20) in Abhängigkeit von einer Änderungsrate (DLTA) der Soll-Öffnung (DTGT) des Abgasrückführungssteuerventils (6); und
   eine Öffnungsänderungseinrichtung (20) zum Ändern der Öffnung des Abgasrückführungssteuerventils (6) in Abhängigkeit von dem korrigierten Ausgabewert (OUTPUT).

2. System nach Anspruch 1, wobei die Korrekturänderungseinrichtung (20) die Korrektur der Korrektureinrichtung (20) in Abhängigkeit von der Änderungsrate (DLTA) der Soll-Öffnung (DTGT) des Abgasrückführungssteuerventils (6) reduziert.

3. System nach Anspruch 2, wobei die Korrekturänderungseinrichtung (20) die Korrektur der Korrektureinrichtung (20) reduziert, wenn die Änderungsrate (DLTA) der Soll-Öffnung (DTGT) größer ist als ein bestimmter oberer Schwellenwert oder kleiner ist als ein bestimmter unterer Schwellenwert.

4. System nach Anspruch 3, wobei die Korrekturänderungseinrichtung (20) die Korrektur der Korrektureinrichtung (20) wieder aufnimmt, wenn die Änderungsrate (DLTA) der Soll-Öffnung (DTGT) zwischen dem oberen und dem unteren Schwellenwert liegt.

**5.** System nach Anspruch 2, wobei das Abgasrückführungssteuerventil (6) eine Unterdruckkammer (9) umfaßt, in die ein Unterdruck einleitbar ist, wobei die Öffnung des Abgasrückführungssteuerventils (5) mit zunehmendem Unterdruck in der Unterdruckkammer (9) größer wird, und wobei die Korrekturänderungseinrichtung (20) die Korrektur der Korrektureinrichtung reduziert, wenn die Ist-Öffnung von Null aus ansteigt.

**6.** System nach Anspruch 5, wobei die Korrekturänderungseinrichtung (20) die Korrektur der Korrektureinrichtung (20) wieder aufnimmt, wenn die Differenz zwischen Soll-Öffnung (DTGT) und Ist-Öffnung (DACT) kleiner ist als ein bestimmter Wert.

**7.** System nach Anspruch 5, wobei das Abgasrückführungssteuerventil (6) eine Membran (8), die die Unterdruckkammer (9) definiert und an der ein Ventilkörper (7) befestigt ist, und eine Rückstellfeder (10), die die Membran (8) in Schließrichtung vorspannt, umfaßt, und wobei das Abgasrückführungssteuerventil (6) öffnet, wenn eine durch den Unterdruck in der Unterdruckkammer bedingte Öffnungskraft größer ist als eine durch die Rückstellfeder (10) bedingte Schließkraft.

**8.** System nach Anspruch 1, wobei der Absolutwert des integralen Terms (KI1) zur Reduzierung der Korrektur verkleinert wird.

**9.** System nach Anspruch 8, wobei der integrale Term (KI1) zur Reduzierung der Korrektur auf Null gesetzt wird.

**10.** System nach Anspruch 1, wobei der Ausgabewert (OUTPUT) in Form eines Tastverhältnisses ausgegeben wird.

**11.** System nach Anspruch 1, wobei die Soll-Öffnung (DTGT) mit zunehmendem Ausgangsmoment der Brennkraftmaschine (1) bei konstanter Brennkraftmaschinendrehzahl kleiner wird.

**12.** System nach Anspruch 1, wobei das Abgasrückführungssteuerventil (6) eine Unterdruckkammer (9), in die ein Unterdruck einleitbar ist, wobei die Öffnung des Abgasrückführungssteuerventils (6) mit zunehmendem Unterdruck in der Unterdruckkammer (9) größer wird, und ein mit der Unterdruckkammer (9) in Verbindung stehendes Unterdrucksteuerventil (12) umfaßt, und wobei das Unterdrucksteuerventil (12) selektiv die Unterdruckkammer (9) mit einer Unterdruckquelle (15) oder der Atmosphäre in Verbindung bringt, um selektiv den Unterdruck oder den Atmosphärendruck in die Unterdruckkammer (9) einzuleiten.

**13.** System nach Anspruch 1, wobei die Brennkraftmaschine (1) ein Dieselmotor ist.

**Revendications**

**1.** Système de recirculation des gaz d'échappement pour un moteur (1) ayant une conduite d'admission (2) et une conduite d'échappement (4), le système comportant:

une conduite de gaz EGR (5) connectant l'une à l'autre les conduites d'admission et d'échappement (2, 4), une soupape de contrôle de gaz EGR (6) disposée dans la conduite de gaz EGR (5) pour contrôler une quantité de gaz EGR s'écoulant au travers de la conduite de gaz EGR (5);
un moyen de calcul d'ouverture cible (20) pour calculer une ouverture cible (DTGT) de la soupape de contrôle de gaz EGR (6) conformément à une condition de fonctionnement du moteur;
un moyen de calcul de valeur de sortie (20) pour calculer une sortie cible (KTGT) correspondant à l'ouverture cible (DTGT);
un moyen de détection d'ouverture (18) pour détecter une ouverture réelle (DACT) de la soupape de contrôle de gaz EGR (6); et
un moyen de correction (20) pour corriger la valeur de sortie (KTGT) calculée par le moyen de calcul de valeur de sortie (20) conformément aux signaux de sortie du moyen de détection d'ouverture (18), en utilisant un coefficient de correction de feedback, pour rendre l'ouverture réelle (DACT) de la soupape de contrôle de gaz EGR (6) égale à l'ouverture cible (DTGT), dans lequel le coefficient de correction de feedback comporte un terme proportionnel (KP) et un terme entier (KI), le terme proportionnel (KP) devant plus grand comme une différence entre l'ouverture réelle (DACT) et l'ouverture cible (DTGT) devient plus grand, et le terme entier (KI) étant renouvelé avec une valeur de renouvellement (KI1) l'une après l'autre, la valeur de renouvellement (KI1) devenant plus grande comme la différence devient plus grande;

caractérisé par

un moyen de changement de correction (20) pour modifier la correction par le moyen de correction (20) conformément à un taux de changement (DLTA) dans l'ouverture cible (DTGT) de la soupape de contrôle de gaz EGR (6); et
un moyen de changement d'ouverture (20) pour modifier l'ouverture de la soupape de contrôle de gaz EGR (6) conformément à la valeur de sortie corrigée (OUTPUT).

2. Système selon la revendication 1, dans lequel le moyen de changement de correction (20) réduit la correction du moyen de correction (20) conformément au taux de changement (DLTA) dans l'ouverture cible (DTGT) de la soupape de contrôle de gaz EGR (6).

3. Système selon la revendication 2, dans lequel le moyen de changement de correction (20) réduit la correction du moyen de correction (20) lorsque le taux de changement (DLTA) de l'ouverture cible (DTGT) est plus grand qu'un seuil supérieur prédéterminé ou plus petit qu'un seuil inférieur prédéterminé.

4. Système selon la revendication 3, dans lequel le moyen de changement de correction (20) reprend la correction du moyen de correction (20) lorsque le taux de changement (DLTA) de l'ouverture cible (DTGT) devient entre les seuils supérieur et inférieur.

5. Système selon la revendication 2, dans lequel la soupape de contrôle de gaz EGR (6) comporte une chambre à vide (9), dans laquelle une dépression peut être introduite, l'ouverture de la soupape de contrôle de gaz EGR (5) devenant plus grande lorsque la dépression dans la chambre à vide (9) devient plus grande, et dans lequel le moyen de changement de correction (20) réduit la correction du moyen de correction lorsque l'ouverture réelle augmente à partir de zéro.

6. Système selon la revendication 5, dans lequel le moyen de changement de correction (20) reprend la correction du moyen de correction (20) lorsqu'une différence entre l'ouverture cible (DTGT) et l'ouverture réelle (DACT) est plus petite qu'une valeur prédéterminée.

7. Système selon la revendication 5, dans lequel la soupape de contrôle de gaz EGR (6) comporte un diaphragme (8) pour définir la chambre à vide (9), auquel son corps de soupape (7) est fixé, et un ressort de rappel (10) pour forcer le diaphragme (8) dans la direction de fermeture,- et dans lequel la soupape de contrôle de gaz EGR (6) s'ouvre lorsqu'une force d'ouverture due à la dépression dans la chambre à vide est plus grande qu'une force de fermeture due au ressort de rappel (10).

8. Système selon la revendication 1, dans lequel la valeur absolue du terme entier (KI1) devient plus petite lorsque la correction doit être réduite.

9. Système selon la revendication 8, dans lequel le terme entier (KI1) devient nul lorsque la correction doit être réduite.

10. Système selon la revendication 1, dans lequel la valeur de sortie (OUTPUT) est sortie sous la forme d'un rapport d'utilisation.

11. Système selon la revendication 1, dans lequel l'ouverture cible (DGTG) devient plus petite lorsque le couple de sortie du moteur (1) devient plus grand à une vitesse de moteur constante.

12. Système selon la revendication 1, dans lequel la soupape de contrôle de gaz EGR (6) comporte une chambre à vide (9), dans laquelle une dépression peut être introduite, l'ouverture de la soupape de contrôle de gaz EGR (5) devenant plus grande comme la dépression dans la chambre à vide (9) devient plus grande, et une soupape de contrôle de vide (12) connectée à la chambre à vide (9), et dans lequel la soupape de contrôle de vide (12) connecte de façon sélective la chambre à vide (9) à la source de vide (15) ou à l'atmosphère, pour introduire de façon sélective la dépression ou la pression atmosphérique dans la chambre à vide (9).

13. Système selon la revendication 1, dans lequel le moteur (1) est un moteur diesel.

# Fig.1

# Fig.2

# Fig.3

# Fig. 4

RATE OF
CHANGE IN
OPENING

O          Y

|DLTA|

# Fig. 5

# Fig. 6

# Fig.7

# Fig. 8

# Fig. 9

```
         ┌──────────────────────┐
         │   INITIALIZATION     │
         └──────────────────────┘
                     │
              ┌────────────┐
              │  KI ← 0    │──── 30
              └────────────┘
                     │
              ┌────────────┐
              │  X1 ← 0    │──── 31
              └────────────┘
                     │
              ┌────────────┐
              │  X2 ← 0    │──── 32
              └────────────┘
                     │
              ┌────────────┐
              │  X3 ← 0    │──── 33
              └────────────┘
                     │
              ┌────────────┐
              │    END     │
              └────────────┘
```

# Fig. 10

```
         ┌──────────────────────────┐
         │   FIRST DETERMINATION    │
         └──────────────────────────┘
                       │
     40 ──         ◇ DTGT > 0 ? ◇ ──── NO ───────┐
                       │ YES                       │
     41 ──        ◇ |DLTA| > Y ? ◇ ──── NO ───────┤
                       │ YES                       │
              ┌────────────┐          ┌────────────┐
              │  X1 ← 1    │── 42     │  X1 ← 0    │── 43
              └────────────┘          └────────────┘
                       │←───────────────────┘
              ┌────────────┐
              │    END     │
              └────────────┘
```

# Fig.11

SECOND DETERMINATION

50 — X2 = 0 ?
 └ NO →

 YES ↓

51 — X3 = 0 ?
 └ NO →

 YES ↓

52 — DTGT = 0 ?
 └ NO → NO ←

 YES ↓

53 — $DACT$ ~~TACT~~ = 0
 └ NO →

 YES ↓

55 — DTGT > 0 ?
 YES ↓

57 — DTGT-DACT < Z ?
 └ NO →

 YES ↓

54 — X3 ← 1

56 — X2 ← 1

X2 ← 0 — 58

X3 ← 0 — 59

END

# Fig. 12

```
        FEEDBACK CONTROL

      CALCULATION OF KTGT          70

       CALCULATION OF KP           71

72          X1=0        NO
              ?
              YES
73          X2=0        NO
              ?
              YES
       CALCULATION OF KI1          74

       KI ← KI+KI1      75      KI ← 0      76

   OUTPUT ← KTGT + KP + KI         77

              END
```